# EUROPÄISCHE PATENTSCHRIFT

(11) **EP 0 940 291 B1**
(45) Veröffentlichungstag und Bekanntmachung des Hinweises auf die Patenterteilung: **02.01.2003**
(21) Anmeldenummer: 99250054.6
(22) Anmeldetag: 25.02.1999
(51) Int. Cl.: B60P 3/00, E01F 9/014, B60P 1/36

(54) **Strassenfahrzeug zum Transport und Magazinieren von Verkehrsschildern**
A road vehicle for transporting and storing of traffic signs
Véhicule routier pour le transport et le magasinage de panneaux de signalisation

(30) Priorität: 06.03.1998 DE 19810769
(43) Veröffentlichungstag der Anmeldung: 08.09.1999
(73) Patentinhaber: Berliner Wasserbetriebe Anstalt des öffentlichen Rechts, 10179 Berlin (DE)
(72) Erfinder: Jözwiak, Wolfgang, Dipl.-Ing, 12209 Berlin (DE); Pritzel, Manfred, Dipl.-Ing., 12107 Berlin (DE); Meinicke, Hartmann, Dipl.-Ing., 12357 Berlin (DE)

(56) Entgegenhaltungen:
- EP-A- 0 012 705
- DE-A- 1 903 855

## Beschreibung

Die Erfindung betrifft ein Straßenfahrzeug zum Transport und Magazinieren von Verkehrsschildern, das beim ortsveränderlichen Ausschildern von Verkehrszeichen eingesetzt wird.

Das Aufstellen oder Abräumen einer großen Anzahl von ortsveränderlichen Verkehrsschildern entlang einer größeren Strecke macht die Nutzung eines Straßenfahrzeuges erforderlich.
Zur Bewältigung des Höhenunterschiedes zwischen Ladefläche und Fahrbahn oder Gehweg wird als Ladehilfe eine eingebaute hydraulisch betriebene Ladebordwand verwendet, um das oftmalige Heben der schweren Fußplattenständer zu erleichtern.
Die Ladeplattform des Lastkraftwagens ist in Längsrichtung mittig durch eine Holzwand getrennt. Die so entstandenen zwei Räume dienen zur Aufnahme der Verkehrsschilder einschließlich der Schaftrohre, die an Hakenleisten befestigt sind. Im hinteren Bereich der Ladeplattform sind die Fußplattenständer stapelförmig angeordnet. Nachteilig hierbei ist, daß die Verkehrsschilder und die Fußplattenständer erst zur Ladeplattform getragen und nach dem Herunterfahren der Ladebordwand zum Aufstellort gebracht werden müssen.
Aus der DE-OS 25 05 860 ist ebenfalls ein Straßenfahrzeug bekannt, das einen Kofferaufbau mit Fächern und einen separaten Grundrahmen, der schwenkbeweglich mittels Hubstempel ausgestattet ist, aufweist. Damit ist die Beweglichkeit gegeben, jedoch das Be- und Entladen erfolgt manuell.

Aufgabe der Erfindung ist es, ein Straßenfahrzeug zum Transport und Magazinieren von Verkehrsschildern zu schaffen, das an einem gewünschten Ort das Ausladen oder das Einsammeln der die Verkehrsschilder aufnehmenden, schweren Fußplattenständer erleichtert, wobei die Sicherheit des Menschen und des Straßenverkehrs gewährleistet bleibt.

Erfindungsgemäß wird diese Aufgabe dadurch gelöst, daß das Straßenfahrzeug zum Transportieren und Magazinieren von ortsveränderlichen Verkehrsschildern bekannterweise aus einer Zugmaschine besteht, an die mittels Sattelzugkupplung ein Aufliegeranhänger angekuppelt ist, wobei
der Aufliegeranhänger gekröpft ausgebildet ist und aus einem vorderen Teil und einem tiefliegenden, mit einer Tandem- oder Dreifachachse versehenen hinteren Teil besteht. In diesem hinteren Teil ist eine Magaziniereinrichtung für die Fußplattenständer und Verkehrsschilder mit Schaftrohren angeordnet. Der hintere Teil ist am Ende mit einer nach unten geneigten Schräge versehen.
Die Magaziniereinrichtung besteht aus einer Endloszugkette, auf der in bestimmten Abständen Rollen mit Einrichtungen zur Aufnahme der Fußplattenständer, beispielsweise Haken, angeordnet sind.
Der vordere gekröpfte Teil des Aufliegeranhängers ist überkoffert und weist Fächer mit seitlich zu öffnenden Klappen zur Unterbringung des mitzuführenden Zubehörs auf. Desweiteren ist der hintere Teil des Aufliegeranhängers mit einem Kofferaufbau versehen, dessen Heckfläche als mittels Hydraulik, Pneumatik oder Federentlastung zu öffnende Klappe ausgebildet ist.
Mit diesem Straßenfahrzeug ist der Transport und das Magazinieren einschließlich das Be- und Entladen von ortsveränderlichen Verkehrsschildern gesichert.

Die Erfindung soll nachstehend an einem Ausführungsbeispiel näher erläutert werden.

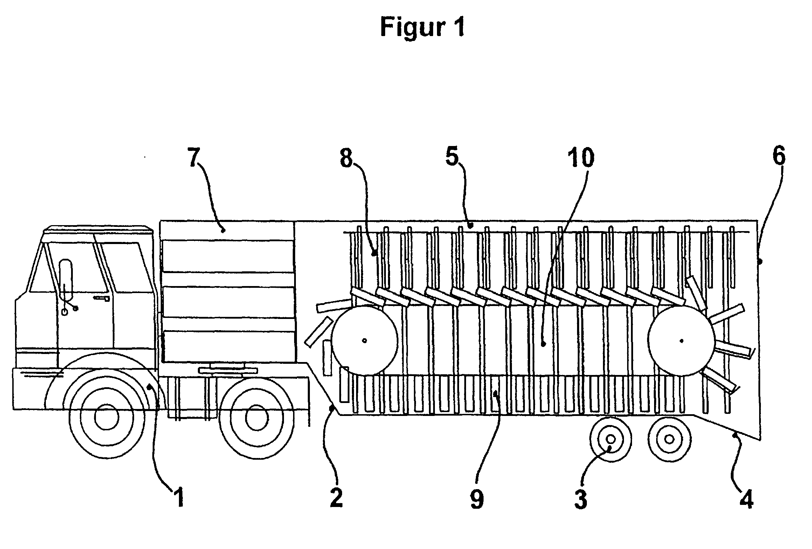

Fig. 1 - zeigt schematisch ein erfindungsgemäß aufgebautes Straßenfahrzeug.
Fig. 2 und Fig. 3 - zeigen Transportmagazine für Fußplattenständer.

Als Zugmaschine findet ein Lkw 1,wegen besserer Wendigkeit mit kurzem Radstand, Verwendung, der eine Sattelkupplung trägt.
Der Aufliegeranhänger 2 ist gekröpft und mit einer Tandem- oder Dreifach-Achse 3 mit möglichst kleinen Rädern, aber entsprechend der erforderlichen Nutzlast, versehen, um die Höhe der Ladefläche so niedrig wie möglich zu halten.
Der hintere überhängende Teil dieser Ladefläche 4 ist zusätzlich nach unten geneigt, so daß die hintere Ladekante unter Einhaltung einer praktikablen Bodenfreiheit so niedrig wie möglich ist.
Der Auflieger ist mit einem Kofferaufbau 5 versehen, dessen Heckfläche als Klappe 6 ausgebildet ist und mittels Hydraulik, Pneumatik oder Federentlastung zu öffnen ist.
Der vordere, gekröpfte Teil 7 des Aufliegers ist überkoffert, hat Fächer und seitlich zu öffnende Klappen und nimmt zusätzlich mitführendes Zubehör auf.
Die von den Fußplattenständern üblicherweise getrennt mitgeführten Verkehrsschilder 8, beispielsweise fest an die Schaftrohre montiert, werden mit einer entsprechenden Halterung versehen, an der Decke des Kofferaufbaus ebenfalls in einer hydraulisch, pneumatisch oder elektromechanisch angetriebenen Fördereinrichtung gehaltert, und können nach Bedarf aus der oder in die Lagerposition zu oder von der Ent- oder Beladestelle bewegt werden.
Entweder in den Boden des tiefliegenden Kofferaufbaus intergriert oder auf diesen aufgebaut sind hydraulisch, pneumatisch oder elektromechanisch angetriebene Rollen, Walzen, Seil- oder Kettenzüge angeordnet, die das Umpositionieren der schweren Fußplattenständer 9 aus der oder in die Lagerposition zu oder von der Ent- oder Beladestelle ermöglichen.

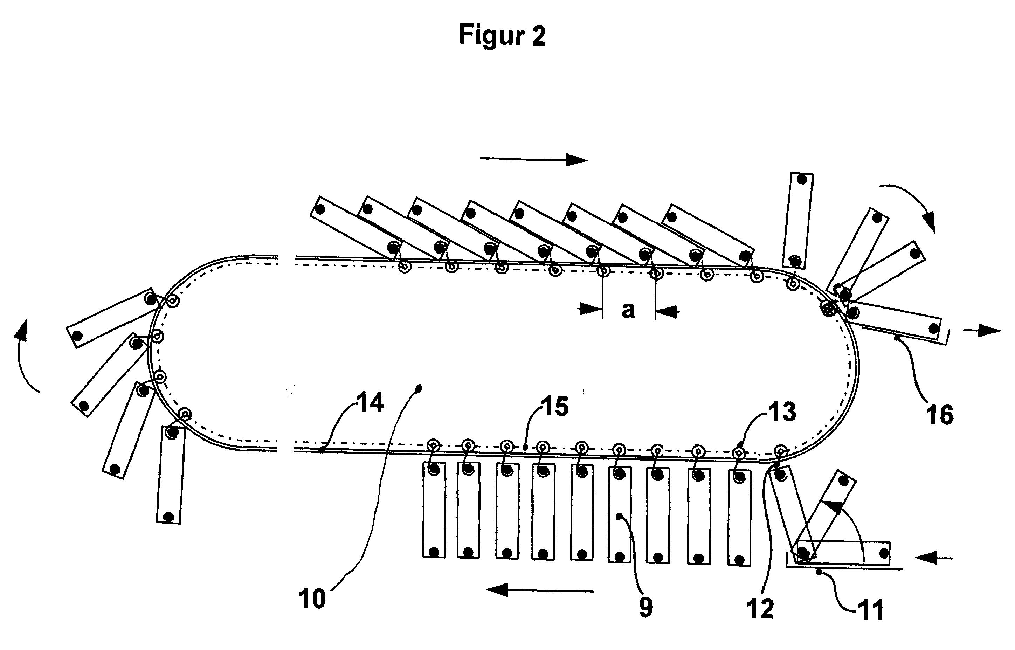

Das Transportmagazin 10 ist in der Fig. 2 dargestellt.
Ein Fußplattenständer 9 wird in die Beladestation 11 gebracht und dort von Hand und/oder mit einer geeigneten Einrichtung, die hydraulisch, elektrisch oder mechanisch unterstützt ist, angekippt, bis dieser einer an ihm dafür vorgesehenen Halterung oder einem an ihm vorhandenen geeigneten Angriffspunkt in eine hakenförmige Halterung 12 kippt.

Dieser Haken 12 ist an Rollen 13 schwenkbar befestigt, die auf oder in Schienen 14 geführt werden.
Diese Rollen 13 werden zusammen mit dem Haken 12 und dem daran hängenden Fußplattenständer 9 mittels einer an ihrer Achse befestigten Zugkette 15 in die markierte Richtung transportiert.
Die Transportbewegung wird von dem Bedienungspersonal ausgelöst und erfolgt schrittweise mit dem Weg der Teilung (a).
Entsprechend der Teilung (a) befindet sich eine Vielzahl der beschriebenen Haken 12 an der Zugkette 15.
Am Umkehrpunkt des Kettentriebes werden die Fußplattenständer 9 durch die Schienen 14 in ihrer Lage verschwenkt und bilden auch oberhalb der Einrichtung ein dichtes platzsparendes Paket.
Der Entladestation 16 sich nähernd, rutscht der Fußplattenständer 9 durch sein Eigengewicht aus dem Haken 12 und kippt anschließend in die Entladestation 16. Von dort wird der Fußplattenständer 9 mittels einer geeigneten Einrichtung, die hydraulisch, elektrisch oder mechanisch unterstützt ist, in eine ergonomisch günstige Entnahmeposition gebracht.

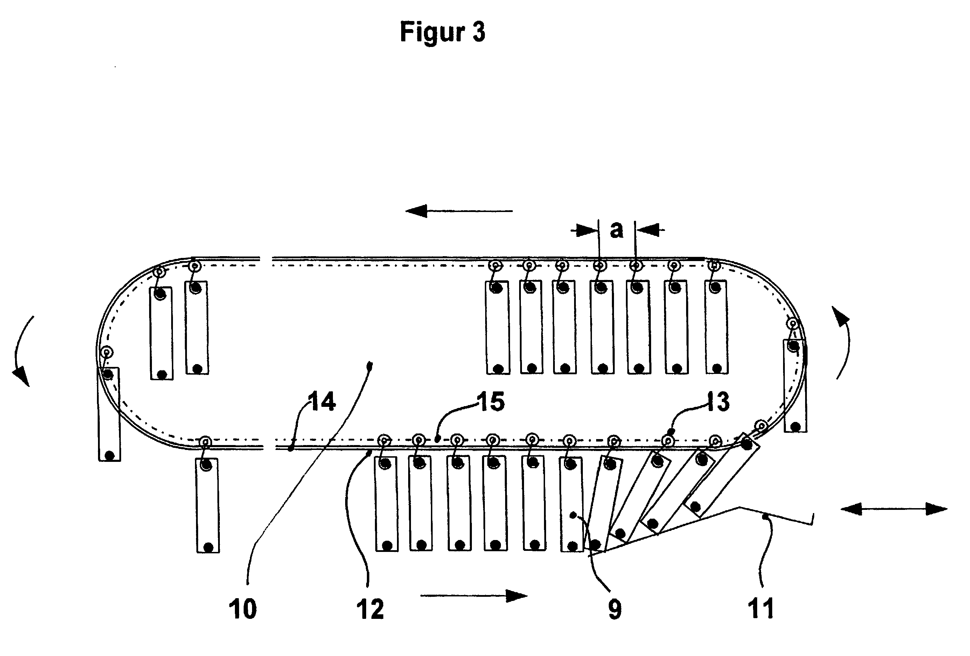

Ein weiteres Transportmagazin 10 ist in der Fig. 3 beschrieben.
Der Fußplattenständer 9 wird, entsprechend der Fig. 2, in die Beladestation 11 gebracht und dort von Hand und/oder mit einer geeigneten Einrichtung, die hydraulisch, elektrisch oder mechanisch unterstützt ist, angekippt, bis dieser mit einer an ihm dafür vorgesehenen Halterung oder einem an ihm vorhandenen geeigneten Angriffspunkt in eine hakenförmige Halterung 12 kippt.
Dieser Haken 12 ist an Rollen 13 schwenkbar befestigt, die auf oder in Schienen 14 geführt werden.
Diese Rollen 13 werden zusammen mit dem Haken 12 und dem daran hängenden Fußplattenständer 9 mittels einer an ihrer Achse befestigten Zugkette 15 in die markierte Richtung transportiert.

Die Transportbewegung wird von dem Bedienungspersonal ausgelöst und erfolgt schrittweise mit dem Weg der Teilung (a).
Entsprechend der Teilung (a) befindet sich eine Vielzahl der beschriebenen Haken 12 an der Zugkette 15.
Am Umkehrpunkt des Kettentriebes bleiben die Fußplattenständen 9 aufgrund des Eigengewichtes in ihrer Lage und bilden innerhalb der Einrichtung, am rückläufigen Teil der Zugkette hängend, ebenfalls ein dichtes platzsparendes Paket.
Die Entladestation 16 ist identisch mit der Beladestation 11. Der Fußplattenständer 9 rutscht durch sein Eigengewicht aus dem Haken 12 und kippt anschließend in die Entladestation 16. Von dort wird der Fußplattenständer 9 mittels einer geeigneten Einrichtung, die hydraulisch, elektrisch oder mechanisch unterstützt ist, in eine ergonomisch günstige Entnahmeposition gebracht.

## Patentansprüche

1. Straßenfahrzeug zum Transportieren und Magazinieren von ortsveränderlichen Verkehrsschildern, bestehend aus einer Zugmaschine, an die mittels Sattelkupplung ein Aufliegeranhänger angekuppelt ist,
**dadurch gekennzeichnet, daß**
der Aufliegeranhänger gekröpft ausgebildet ist und aus einem vorderen Teil (7) und einem tieferliegenden, mit einer Tandem- oder Dreifachachse (3) versehenen hinteren Teil (2) besteht, wobei eine Magazineinrichtung (10) für die Fußplattenständer (9) und Verkehrsschilder (8) mit Schaftrohren in diesem hinteren Teil (2) angeordnet ist.

2. Straßenfahrzeug nach Anspruch 1,
**dadurch gekennzeichnet, daß**
der hintere Teil (2) des Aufliegeranhängers am Ende mit einer nach unten geneigten Schräge (4) versehen ist.

3. Straßenfahrzeug nach den Ansprüchen 1 bis 2,
**dadurch gekennzeichnet, daß**
die Magaziniereinrichtung (10) aus einer Endloszugkette (15) besteht, auf der in bestimmten Abständen Rollen (13) mit Einrichtungen zur Aufnahme der Fußplattenständer (9), beispielsweise Haken (12), angeordnet sind.

4. Straßenfahrzeug nach den Ansprüchen 1 bis 4,
**dadurch gekennzeichnet, daß**
der vordere gekröpfte Teil (7) des Aufliegeranhängers überkoffert ist und Fächer mit seitlich zu öffnenden Klappen aufweist.

5. Straßenfahrzeug nach den Ansprüchen 1 bis 3,
**dadurch gekennzeichnet, daß**
der hintere Teil (2) des Aufliegeranhängers mit einem Kofferaufbau (5) versehen ist, dessen Heckfläche als mittels Hydraulik, Pneumatik oder Federentlastung zu öffnende Klappe (6) ausgebildet ist.

## Revendications

1. Véhicule routier pour transporter et stocker des panneaux de circulation mobiles, composé d'un tracteur auquel est reliée une semi-remorque par l'intermédiaire d'un moyen d'attelage,
**caractérisé en ce que**
la semi-remorque est coudée et se compose d'une partie avant (7) et d'une partie arrière (2), plus basse, équipée d'un essieu tandem ou triple essieu (3), avec, dans la partie arrière (2), un magasin (10) prévu pour les pieds à socle (9) et les panneaux de circulation (8) avec les tubes.

2. Véhicule routier selon la revendication 1,
**caractérisé en ce que**
la partie arrière (2) de la semi-remorque comporte à son extrémité une rampe (4) inclinée vers le bas.

3. Véhicule routier selon l'une quelconque des revendications 1 et 2,
**caractérisé en ce que**
l'installation du magasin (10) se compose d'une chaîne sans fin (15) équipée, à des intervalles déterminés, de galets (13) avec des installations pour recevoir les pieds à socle (9), par exemple des crochets (12).

4. Véhicule routier selon l'une quelconque des revendications 1 à 3,
**caractérisé en ce que**
la partie avant coudée (7) de la semi-remorque comporte un coffrage supérieur et des compartiments avec des volets s'ouvrant latéralement.

5. Véhicule routier selon l'une quelconque des revendications 1 à 3,
**caractérisé en ce que**
la partie arrière (2) de la semi-remorque est munie d'une super structure de coffre (5) dont la surface arrière comporte des moyens d'assistance hydraulique, pneumatique ou à ressort pour ouvrir le volet (6).

## Claims

1. Road vehicle for transporting and storing traffic signs variable in position, consisting of a towing vehicle to which a semitrailer is coupled by means of a semitrailer coupling, **characterised in that** the semitrailer is constructed to be cranked and consists of a forward part (7) and a rearward part (2) which is disposed lower and provided with a double or triple axle (3), wherein a magazine device (10) for the base plate supports (9) and traffic signs (8) together with shank tubes is arranged in this rearward part (2).

2. Road vehicle according to claim 1, **characterised in that** the rearward part (2) of the semitrailer is provided at the end with a downwardly inclined chamfer (4).

3. Road vehicle according to claims 1 and 2, **characterised in that** magazine device (10) consists of an endless pull chain (15), on which rollers (13) with devices, for example hooks (12), for reception of the base plate supports (9) are arranged at defined spacings.

4. Road vehicle according to claims 1 to 3, **characterised in that** the forward cranked part (7) of the semitrailer is boxed over and has compartments with laterally openable flaps.

5. Road vehicle according to claims 1 to 3, **characterised in that** the rearward part (2) of the semitrailer is provided with a boxed superstructure (5), the tail area of which is formed as a flap (6) openable hydraulically, pneumatically or by spring relief.
